# EUROPÄISCHE PATENTANMELDUNG

(11) **EP 1 843 103 A2**
(43) Veröffentlichungstag der Anmeldung: **10.10.2007**
(21) Anmeldenummer: 06009897.7
(22) Anmeldetag: 13.05.2006
(51) Int. Cl.: F24D 3/16, F24F 5/00, F28F 3/14

(54) **Flüssigkeitsdurchflutete Mittel zum Temperieren von Räumen**

(30) Priorität: 03.04.2006 DE 202006005348 U
(71) Anmelder: Mostafa, Kamal, Giza (EG)
(72) Erfinder: Mostafa, Kamal, Giza (EG)
(74) Vertreter: Berg, Eike Karl

(57) **Zusammenfassung**

Vorgeschlagen werden flüssigkeitsdurchflutete Mittel zum Temperieren von Räumen
• mit einer ersten Metallplatte (1), einer der ersten Metallplatte (1) gegenüberliegenden zweiten Metallplatte (2), die mit der ersten Metallplatte (1) unlöslich verbunden ist, und mit einer Vielzahl von Durchflutungskanälen (3), die zwischen den beiden Metallplatten (1, 2) mittels Rollbond-Verfahren ausgebildet sind, wobei jeder aus der Vielzahl von Durchflutungskanälen (3) jeweils eine in allen Fällen einheitliche umschlossene Querschnittsfläche (*V*) aufweist,
dadurch gekennzeichnet, dass
• die Durchflutungskanäle (3) kapillar ausgebildet sind und eine jeweilige Querschnittsfläche (*V*) in einem Bereich von 4 mm² einschließlich bis 15 mm² einschließlich aufweisen.

Gemäß verschiedener bevorzugter Ausführungsformen weisen die erfindungsgemäßen Mittel zum Temperieren von Räumen u.a. rückseitig eine Wärmedämmschicht (4) mit Konvektionskanälen (5) sowie vorderseitig eine Strahlungsschicht (6) mit elektrischen Heizmitteln (7) auf.

## Beschreibung

Die vorliegende Erfindung betrifft flüssigkeitsdurchflutete Mittel zum Temperieren von Räumen mit einer ersten Metallplatte, einer der ersten Metallplatte gegenüberliegenden und mit der ersten Metallplatte unlöslich verbundenen zweiten Metallplatte sowie mit einer Vielzahl von Durchflutungskanälen, die zwischen den beiden Metallplatten mittels Rollbond-Verfahren ausgebildet sind. Dabei soll jeder aus der Vielzahl von Durchflutungskanälen eine in allen Fällen einheitliche umschlossene Querschnittsfläche (*V*) aufweisen.

Grundsätzlich ist das Rollbond-Verfahren seit vielen Jahren bekannt und hat sich heutzutage insbesondere zur Fertigung von Verdampfern für Kühlschränke bewährt. Bei dem Rollbond-Verfahren werden, wie es die Universität Karlsruhe in einer ihrer Internet-Veröffentlichungen beschreibt, zwei Bleche, in der Regel aus Aluminium, erhitzt und aufeinandergewalzt, nachdem zuvor die gewünschte Kanalstruktur mit einem Trennmittel, beispielsweise Graphit, auf eines der Bleche aufgedruckt wurde. Durch den Walzprozess verschweißen die Bleche vollflächig miteinander außer an den Stellen, an denen zuvor das Trennmittel aufgebracht wurde. Nach einem anschließenden Anlassprozess werden die verschweißten Bleche bei ca. 100 bis 150 bar "aufgeblasen", so dass die gewünschten Kanäle entstehen.

Nach einem Vorschlag der **DT 26 04 879 A 1** zufolge können zwei ebene Platten aus Stahlblech oder Kunststoff auch durch Punktschweißen, Rollschweißen, Verkleben oder dergleichen entsprechend eines vorgegebenen Musters einschließlich der äußeren Umrandung miteinander verbunden und alsdann beispielsweise mit Luft unter ausreichendem Druck gefüllt werden, bis die Platten in Bereichen zwischen benachbarten, fest verbundenen Stellen steppdeckenförmig aufgeblasen sind Im Endeffekt ist das Ergebnis auch hier wieder ein Gebilde aus zwei Platten mit dazwischen liegenden, durch Aufblasen der Plattenzwischenräume entstandenen Durchflutungskanälen gemäß eines vorgegebenem Musters.

Lt. einem Vorschlag der WO 01/59371 A1 umfasst eine Wärmetauscherplatte zum Einbau in Hausdecken und/oder-wänden eine derart bekannte und nach dem Rollbond-Verfahren hergestellte Konditionierungsplatte, die vorderseitig mit einer, eher ästhetischen Gesichtspunkten folgenden Abschlussplatte und rückseitig mit einer Wärmeisolierplatte bedeckt ist. Die bevorzugt 0,4 bis 4 mm dicke Kupfer- oder Aluminiumplatten aufweisende Konditionierungsplatte kann wahlweise mit heißen oder kalten Flüssigkeiten betrieben werden, um derart ausgekleidete Räume entweder zu beheizen oder abzukühlen.

Gegenstand der GB-A-1180607 ist ebenfalls eine Wärmetauscherplatte zur Beheizung oder zur Kühlung von Räumen, die mit Ausnahme der vorderseitigen Abschlussplatte, wie sie in der WO 01/59371 A1 beschrieben wird, vergleichbare Merkmale wie die eingangs beschriebene Wärmetauscherplatte aufweist.

Zweifellos haben sich die bekannten Wärmetauscherelemente mit Konditionierungsplatten nach dem Rollbond-Verfahren in Teilen gut bewährt. Nachteilig ist es jedoch, dass die sich beim Betrieb der Wärmetauscherelemente aufgrund des Flüssigkeitsdrucks ergebenden Spannungen in den Konditionierungsplatten immer wieder zu deren Zerstörung führen, was gerade bei deren Einbau in Decken und Wänden zu sehr kostenintensiven Wasserschäden führt.

So ist es Aufgabe der zugrunde liegenden Erfindung, flüssigkeitsdurchflutete Mittel zum Temperieren von Räumen zur Verfügung zu stellen, die verglichen mit den bekannten Wärmetauscherelementen, eine höhere Betriebssicherheit garantieren können und die zudem im laufenden Betrieb auch geringere Betreiberkosten verursachen.

Die Aufgabe wird gelöst mittels flüssigkeitsdurchfluteter Mittel zum Temperieren von Räumen
● mit einer ersten Metallplatte,
● mit einer der ersten Metallplatte gegenüberliegenden zweiten Metallplatte, die mit der ersten Metallplatte unlöslich verbunden ist,
● mit einer Vielzahl von Durchflutungskanälen, die zwischen den beiden Metallplatten mittels Rollbond-Verfahren ausgebildet sind, wobei jeder aus der Vielzahl von Durchflutungskanälen jeweils eine in allen Fällen einheitliche umschlossene Querschnittsfläche (V) aufweist,
dadurch gekennzeichnet, dass
o die Durchflutungskanäle kapillar ausgebildet sind und
o eine jeweilige Querschnittsfläche (V) in einem Bereich von 4 mm² einschließlich bis 15 mm² einschließlich aufweisen.

In bevorzugten Ausführungsformen liegt die jeweilige Querschnittsfläche (*V*) der kapillar ausgebildeten Durchflutungskanäle in einem Bereich von 5 bis 15 mm², von 5 bis 10 mm² bzw. ganz besonders bevorzugt in einem Bereich von 5 bis 8 mm², wobei die beanspruchten Bereichsgrenzen jeweils einschließlich zu verstehen sind.

Durch die Ausbildung der Durchflutungskanäle in kapillarer Bauform reduzieren sich die Spannungen in den Metallplatten auf Grund des Flüssigkeitsdrucks im Inneren der flüssigkeitsdurchfluteten Mittel, was zum einen die Verwendung dünnerer Metallplatten ermöglicht und somit die Herstellungskosten der erfindungsgemäßen Mittel zum Temperieren von Räumen senkt. Zum anderen reduziert sich signifikant die Gefahr von Undichtigkeiten der im Walzprozess verschweißten Metallplatten. Mit der Verwendung nur kapillarer Durchflutungskanäle, die zwischen einem bevorzugt zentralen Zuführelement und einem bevorzugt zentralen Abführelement in einer Vielzahl parallel zueinander und in Abständen zueinander Idealerweise zwischen 8 und 12 mm innerhalb der erfindungsgemäßen Mittel zum Temperieren von Räumen verlegt sind, stellen sich typische Strömungsgeschwindigkeiten von nur 10 bis 20 cm/sec in den Durchflutungskanälen ein, womit die Strömung in den Durchflutungskanälen immer laminar ist. Das hat den positiven Effekt, dass der Druckverlust in den erfindungsgemäßen Mitteln zum Temperieren von Räumen nicht quadratisch, sondern nur linear mit der Flüssigkeitsmenge wächst.

Ferner ist bei Verwendung nur kapillarer Durchflutungskanäle die Menge der erforderlichen Flüssigkeit im Inneren eines Heiz- und/oder Kühlkreislaufes im Vergleich zu den aus dem Stand der Technik bekannten dickeren Kanälen gering, was sowohl notwendige Aufheiz- bzw. Abkühlenergie zur Temperierung der genutzten Flüssigkeit einspart als auch den Aufwand an technischer Ausrüstung verringert.

Der eingangs beschriebene Stand der Technik zu im Rollbond-Verfahren hergestellten Konditionierungs- und Wärmetauscherplatten lässt sich derart zusammenfassen, dass deren Ausformung mit kapillar ausgebildeten Durchflutungskanälen weder bekannt ist noch in irgendeiner Form auch nur ansatzweise angeregt wird. Für die Heiz- und Klimatechnik bekannt sind einzig so genannte KaRo-(Kapillar-Rohr)-Matten, bei denen kapillar geformte Rohre zu Heizungsgebilden in Form von Matten verklebt, verlötet oder verschweißt werden. Die seit vielen Jahren bekannte Technik zeichnet sich nachteilig durch einen aufwendigen Herstellungsprozess dieser KaRo-Matten aus und weist deshalb zum einen den Nachteil hoher Herstellungskosten auf. Zum anderen weist diese bekannte Technik den Nachteil schlechter Wärmeübertragungswerte von der Heizflüssigkeit über die Kapillarrohre hin zur Abstrahlungsfläche und somit gleichzeitig den Nachteil geringer Energieeffektivität bzw, hoher Energieverluste auf.

Als Material für die beiden Metallplatten der flüssigkeitsdurchfluteten Mittel zum Temperieren von Räumen gemäß der vorliegenden Erfindung hat sich Kupfer und insbesondere Aluminium bewährt, weshalb diese Materialien als bevorzugt im Sinne der vorliegenden Erfindung gelten. Die Dicke der jeweiligen Metallplatten liegt bei Aluminiumplatten bevorzugt in einem Bereich von 0,3 bis 0,6 mm bzw. ganz besonders bevorzugt in einem Bereich von 0,4 bis 0,55 mm. Aus Schallschutzgründen ist es möglich, die zusammengefügten Platten mit durchgehenden Bohrungen an den Stellen zu versehen, an denen keine Durchflutungskanäle verlaufen.

Die Beständigkeit der erfindungsgemäßen Mittel zum Temperieren von Räumen kann in einem wesentlichen Maße gegen Undichtigkeiten gesteigert werden, wenn die Durchflutungskanäle eine jeweilige korrosionsbeständige und vor Korrosion schützende Innenbeschichtung aufweisen aus oder auf Basis von einem Kunstharz, ausgesucht aus der Liste, umfassend: Epoxydharz, Polyurethanharz, Polyesterharz, Polyethylenharz.

Realisiert werden kann eine solche korrosionsbeständige und vor Korrosion schützende Innenbeschichtung der Durchflutungskanäle, indem in die Durchflutungskanäle zunächst ein Reinigungsmittel eingelassen wird, um eventuelle Restbestände der zuvor im Rollbond-Herstellungsprozess genutzten Trennmittel zu entfernen. Dabei hat sich eine Formulierung für ein Beizmittel als besonders geeignet erwiesen, bei der auf 65,5 Gew.-% Wasser 7,5 Gew.-% Natriumbichromat und 27 Gew.-% Schwefelsäure (1,82 g/ml) kommen. Ideale Temperatur des Beizmittels während des Reinigungsprozesses sind 60°C.

Nach gründlicher Spülung der Durchflutungskanäle beispielsweise mit Wasser und anschließender Trocknung, in dem beispielsweise Luft durch die Durchflutungskanäle geführt wird, erfolgt beispielhaft die Innenbeschichtung der Durchflutungskanäle mit einer Beschichtungsflüssigkeit, bei der bevorzugt auf
● 30 Gew.-Teile "Desmodur^{®} E 1361 MPA/X (Bayer AG, 51368 Leverkusen - Deutschland): aromatisches Polyisocyanat-Prepolymer auf Basis Toluylendiisocyanat,
● 4,5 Gew.-Teile "Desmodur^{®} E 14" (Bayer AG): aromatisches Polyisocyanat-Prepolymer auf Basis Toluylendiisocyanat, und
● 0,5 Gew.-Teile "Zusatzmittel TI" - Produktgruppe: Spezialitäten (Borchers GmbH, Berghausener Straße 100, 40764 Langenfeld - Deutschland): p-Toluolsulfonylisocyanat,
kommen.

Um eine als besonderes geeignet erkannte Schichtdicke der Innenbeschichtung in den Durchflutungskanälen von 25 -50 µm zu erzielen, ist die Viskosität der Beschichtungsflüssigkeit geeignet einzustellen, wozu Verdünnungsmittel, wie beispielsweise Shellsol^{®} A (Firma Shell, Suhrenkamp 71-77, 22284 Hamburg - Deutschland) sehr gut geeignet ist.

In einer besonderen Ausführungsform weisen die erfindungsgemäßen Mittel zum Temperieren von Räumen, benachbart zu einer der beiden Metallplatten rückseitig eine Wärmedämmschicht auf. Besonders bietet sich hierfür eine Schicht aus oder auf Basis von extrudiertem Polystyrolschaum oder aus einer Masse von Glaskugeln in Kunststoffbindemittel bzw. in zementösem Bindemittel an. Die Wärmedämmschicht weist dabei in einer besonders bevorzugten Ausführungsform Konvektionskanäle auf, die in die Wärmedämmschicht eingelassen, beispielsweise eingefräst sind. Genauso können die Konvektionskanäle bei der gießtechnischen Herstellung der Wärmedämmschicht durch entsprechende Aussparungen in der Gießform hergestellt werden.

Zur Erzielung eines bestmöglichen Heizeffektes werden die außenseitig offenen Konvektionskanäle mit einer jeweiligen Querschnittsfläche bevorzugt in einem Bereich von 1 bis 2 cm² und in einem Parallelabstand von 2 bis 4 cm zueinander als Nuten in die Seite der Wärmedämmschicht eingelassen, die zur Oberfläche der benachbarten Metallplatte hin orientiert ist. Bei an die Wand montierten flüssigkeitsdurchfluteten Mitteln zum Temperieren von Räumen gemäß der vorliegenden Erfindung sollen die Konvektionskanäle zwischen Wand und rückseitiger Metallplatte in vertikaler Richtung verlaufen.

Die außenseitige Oberfläche der ersten und/oder zweiten Metallplatten bzw. bei rückseitig vorgesehener Wärmedämmschicht nur die außenseitige Oberfläche der vorderen der beiden Metallplatten kann zumindest teilweise so ausgebildet sein, dass sie anstreichbar und/oder tapezierbar ist. Dazu ist auf die derart auszubildende Metallplattenoberfläche ein geeignetes Bindemittel wie beispielsweise Epoxidharz aufzutragen, in das mineralischer Splitt eingestreut ist. Auf diese Weise lässt sich die Haftung der außenseitigen Oberflächen der ersten und/oder zweiten Metallplatten gegenüber Putzen und Fliesenklebern verbessern.

In einer dazu alternativen Ausführungsform weisen die erfindungsgemäßen Mittel zum Temperieren von Räumen, benachbart zu einer der beiden Metallplatten vorderseitig eine Strahlungsschicht auf. In einer besonders bevorzugten Ausführungsform liegt die Strahlungsschicht dabei als ein einteiliges Gussteil Idealerweise auf Basis von Kunstharzen wie beispielsweise Epoxydharz, Polyurethanharz, Acrylharz oder Polyesterharz vor. Auch sind hydraulische Bindemittel wie beispielsweise Zement möglich. Die genannten Bindemittel, zu denen als weitere Alternative auch noch vernetztes Polyethylen gehört, können gegebenenfalls mit ergänzenden Komponenten, wie beispielsweise Steinmehl, Quarz und zumeist Fasern vermischt sein, wobei besonders gut solche Komponenten geeignet sind, die die thermische Leitfähigkeit steigern, wie beispielsweise Graphit oder Siliciumcarbid. Weiterhin kann durch die Einbettung von Metallblechen und/oder -folien in die Strahlungsschicht die Wärmeleitfähigkeit derselben weiter verbessert werden.

Wenn gewünscht, können zwecks Dekoration oder zur Verstärkung oder auch aus anderen Gründen in die Strahlungsschicht Gitter, Geflechte oder Vliese eingelegt oder eine oder mehrere weitere Schichten außenseitig angegossen werden. Auch können auf die erste und/oder zweite Metallplatte mosaikartig gestaltete Fliesen aus fließfähig aufbereitbarem Material angegossen werden.

In einer ganz besonders bevorzugten Ausführungsform sind in die Strahlungsschicht elektrische Heizelemente eingebettet. Diese elektrischen Heizelemente können insbesondere in der Form elektrischer Heizfolien und elektrischer Heizleitungen ausgebildet sein, wobei die Heizfolien wie auch die Heizleitungen bevorzugt mit Anschlussmitteln beispielsweise in Form von Buchsen zur elektrischen Versorgung mit Strom aus dem öffentlichen Versorgungsnetz oder eines vorgeschalteten Transformators versehen sind. Sehr gute Testergebnisse konnten dabei mit an den elektrischen Heizelementen anliegenden Versorgungsspannungen von 110 und 220 V (Wechselspannung) sowie 12, 24 und 40 V (Wechsel- oder Gleichspannung) gemacht werden. Kommen Heizleitungen zum Einsatz, sind diese bevorzugt mäanderförmig in der Strahlungsschicht verlegt. Auch ist es möglich, die Heizleitungen gitterförmig in der Strahlungsschicht auszubilden. Durch die im Fall der Einbettung elektrischer Heizleitungen in die Strahlungsschicht bevorzugt elektrisch isolierende Einstellung des Materials für die Strahlungsschicht können die elektrischen Heizleitungen auch ohne Isolierungen durch PVC, Teflon, Silikon o.ä. verwendet werden.

Die flüssigkeitsdurchfluteten Mittel zum Temperieren von Räumen gemäß der vorliegenden Erfindung weisen bevorzugt ein zentrales Zuführelement zur Zuführung der Heiz- und/oder Kühlflüssigkeit sowie ein zentrales Abführelement zur Abführung der Heiz- und/oder Kühlflüssigkeit auf, zwischen denen eine Vielzahl der kapillaren Durchflutungskanäle bevorzugt geradlinig parallel oder aber anderen Mustern folgend angeordnet sind. Das oder die Zuführelement(e) sowie das oder die Abführelement(e) sind in der Regel nicht kapillar ausgebildet. In bekannter Weise können die Zuführ- und/oder Abführelemente als nicht kapillare Kanäle im Rollbond-Verfahren aus den Metallplatten ausgetrieben werden, in dem diese Elemente mit punkt- oder linienförmigen Zwischenwandungen aus einer Vielzahl häufig miteinander querverbundenen kapillaren Einzelkanälen aufgebaut werden. Auch können die Metallplatten im Bereich der Zuführ- und/oder Abführelemente verstärkt ausgeführt sein.

Genauso wie die Durchflutungskanäle weisen die Zuführ- und/oder Abführelemente bevorzugt eine korrosionsbeständige und vor Korrosion schützende Innenbeschichtung aus oder auf Basis von einem Kunstharz, ausgesucht aus der Liste, umfassend: Epoxydharz, Polyurethanharz, Polyesterharz, Polyethylenharz auf.

Sofern die erfindungsgemäßen Mittel zum Temperieren von Räumen entsprechend einer bevorzugten Ausführungsform eine rückseitig positionierte Wärmedämmschicht aufweisen ist es zweckmäßig ohne darauf beschränkt zu sein, die Zuführ- und/oder Abführelemente durch die Wärmedämmschicht hindurch zuführen.

Eingebunden in ein bestehendes oder neu aufzubauendes Heizungs- und/oder Kühlsystem werden die Durchflutungskanäle von einer Flüssigkeit durchströmt, wobei hier insbesondere Wasser vorgesehen ist, ohne darauf beschränkt zu sein. Entionisiertes Wasser oder entkalktes Wasser gelten im gleichen Maße als bevorzugt.

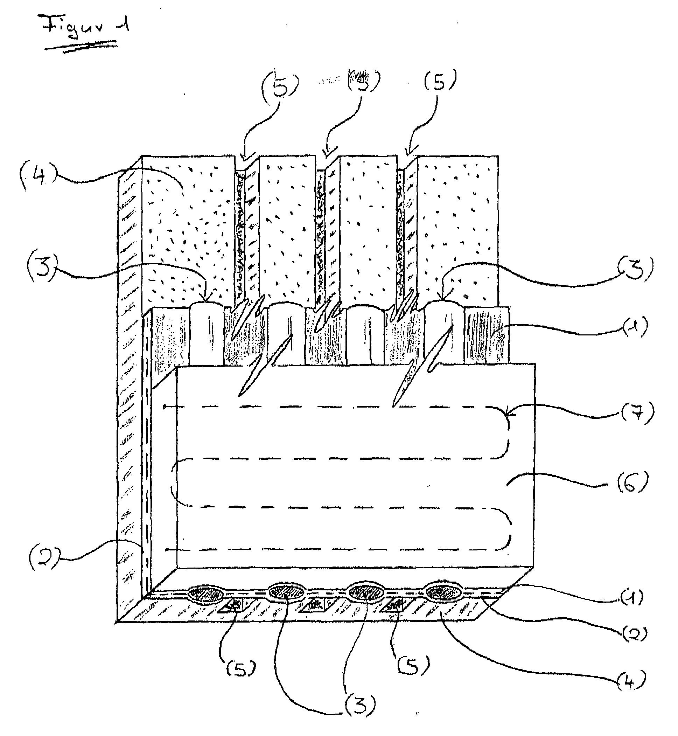

Die folgende Figur 1 soll die Erfindung weitergehend verdeutlichen:

In Figur 1 ist der Ausschnitt eines an die Wand zu montierenden Heizkörpers als Beispiel der flüssigkeitsdurchfluteten Mittel zum Temperieren von Räumen gemäß bevorzugter Ausführungsformen der vorliegenden Erfindung zu sehen mit einer ersten Metallplatte (1) und einer dahinter angeordneten zweiten Metallplatte (2), hier jeweils aus 0,5 mm dicken Aluminiumblechen, zwischen denen im Rollbond-Verfahren vertikal ausgerichtete Durchflutungskanäle (3) mit einer jeweils und in allen Fällen einheitlichen umschlossenen Querschnittsfläche (V) von 6 mm² ausgebildet sind. Die Durchflutungskanäle weisen eine Innenbeschichtung auf Polyurethanbasis auf. Vorderseitig ist auf die in diesem Fall erste Aluminiumplatte (1) eine Strahlungsschicht (6) von 0,4 cm Dicke aufgebracht, die als Gussteil auf Basis von Epoxydharz mit eingebettetem Graphit ausgebildet ist. In die Strahlungsschicht (6) sind mäanderförmig verlegte elektrische Heizleitungen als elektrische Heizmittel (7) eingelassen, die über Verbindungsbuchsen mit einem nicht dargestellten Transformator betrieben werden können. Rückseitig ist an die in diesem Fall zweite Aluminiumplatte (2) eine 3,5 cm dicke Wärmedämmschicht (4) auf Basis von extrudiertem Polystyrolschaum angesetzt. In die Wärmedammschicht (4) sind vertikal angeordnete, an der Außenseite des Heizkörpers offene Konvektionskanäle (5) mit einer jeweiligen Querschnittsfläche von 1,5 cm² eingelassen, wobei die Konvektionskanäle (5) direkt benachbart zur zweiten Aluminiumplatte (2) angeordnet sind.

Derart aufgebaute flüssigkeitsdurchflutete Mittel zum Temperieren von Räumen gemäß der vorgeschlagenen Erfindung garantieren, verglichen mit den bekannten Wärmetauscherelementen, eine höhere Betriebssicherheit und zeichnen sich zudem im laufenden Betrieb durch besonders geringe Betreiberkosten aus.

### Begriffsliste:

(1) erste Metallplatte
(2) zweite Metallplatte
(3) Durchflutungskanäle
(4) Wärmedämmschicht
(5) Konvektionskanäle
(6) Strahlungsschicht
(7) elektrische Heizmittel

## Patentansprüche

1. Flüssigkeitsdurchflutete Mittel zum Temperieren von Räumen
● mit einer ersten Metallplatte (1),
● mit einer der ersten Metallplatte (1) gegenüberliegenden zweiten Metallplatte (2), die mit der ersten Metallplatte (1) unlöslich verbunden ist,
● mit einer Vielzahl von Durchflutungskanälen (3), die zwischen den beiden Metallplatten (1, 2) mittels Rollbond-Verfahren ausgebildet sind, wobei jeder aus der Vielzahl von Durchflutungskanälen (3) jeweils eine in allen Fällen einheitliche umschlossene Querschnittsfläche (V) aufweist,
**dadurch gekennzeichnet, dass**
o die Durchflutungskanäle (3) kapillar ausgebildet sind und
o eine jeweilige Querschnittsfläche (V) in einem Bereich von 4 mm² einschließlich bis 15 mm² einschließlich aufweisen.

2. Flüssigkeitsdurchflutete Mittel zum Temperieren von Räumen nach Anspruch 1, **dadurch gekennzeichnet, dass** die Durchflutungskanäle (3) eine jeweilige Querschnittsfläche (V) in einem Bereich von 5 bis 8 mm² jeweils einschließlich aufweisen.

3. Flüssigkeitsdurchflutete Mittel zum Temperieren von Räumen nach einem der Ansprüche 1 und 2, **dadurch gekennzeichnet, dass** die Durchflutungskanäle (3) eine jeweilige Innenbeschichtung aus oder auf Basis von einem Kunstharz, ausgesucht aus der Liste, umfassend: Epoxydharz, Polyurethanharz, Polyesterharz, Polyethylenharz aufweisen.

4. Flüssigkeitsdurchflutete Mittel zum Temperieren von Räumen nach einem der Ansprüche 1 bis 3, **dadurch gekennzeichnet, dass** benachbart zu einer der beiden Metallplatten (1, 2) rückseitig eine Wärmedämmschicht (4) positioniert ist.

5. Flüssigkeitsdurchflutete Mittel zum Temperieren von Räumen nach Anspruch 4, **dadurch gekennzeichnet, dass** in die Wärmedämmschicht (4) Konvektionskanäle (5) eingelassen sind.

6. Flüssigkeitsdurchflutete Mittel zum Temperieren von Räumen nach einem der Ansprüche 1 bis 3, **dadurch gekennzeichnet, dass** benachbart zu einer der beiden Metallplatten (1, 2) vorderseitig eine Strahlungsschicht (6) positioniert ist.

7. Flüssigkeitsdurchfilutete Mittel zum Temperieren von Räumen nach Anspruch 6, **dadurch gekennzeichnet, dass** die Strahlungsschicht (6) aus gegossenem Material besteht.

8. Flüssigkeitsdurchflutete Mittel zum Temperieren von Räumen nach einem der Ansprüche 6 und 7, **dadurch gekennzeichnet, dass** in die Strahlungsschicht (6) elektrische Heizmittel (7) eingelassen sind.
